# EUROPEAN PATENT APPLICATION

(11) **EP 1 379 015 A1**
(43) Date of publication of application: **07.01.2004**
(21) Application number: 03705194.3
(22) Date of filing: 14.02.2003
(51) Int. Cl.: H04B 7/26

(54) **BASE STATION DEVICE AND PACKET TRANSMISSION METHOD**

(30) Priority: 15.02.2002 JP 2002039288
(71) Applicant: MATSUSHITA ELECTRIC INDUSTRIAL CO., LTD., Kadoma-shi, Osaka 571-8501 (JP)
(72) Inventor: KANEMOTO, Hideki, Yokosuka-shi, Kanagawa 239-0847 (JP); MIYA, Kazuyuki, Asao-ku, Kawasaki-shi, Kanagawa 215-0021 (JP)
(74) Representative: Grünecker, Kinkeldey, Stockmair & Schwanhäusser Anwaltssozietät
(86) International application number: PCT/JP2003/001597
(87) International publication number: WO 2003/069805

(57) **Abstract**

A despreading section 104 outputs a signal indicative of the number of paths through which despreading is performed to a likelihood calculating section 108. The fD detecting section 107 detects Doppler frequency (fD) that is a fading variation of the propagation path between each communication terminal apparatus and a base station apparatus from the despread signal. A likelihood calculating section 108 calculates likelihood of a report value transmitted from each communication terminal apparatus based on the number of paths which despreading is performed and the Doppler frequency. A transmission destination deciding section 151 decides a communication terminal apparatus that transmits a high-speed downlink packet based on a determination value obtained by multiplying the report value by the likelihood. A modulation scheme deciding section 152 decides an encoding rate of the high-speed downlink packet and a modulation scheme thereof based on the determination value. Accordingly, in high-speed downlink packet access, the error included in the report value is considered to perform transmission, making it possible to attain a reduction in the number of retransmission, improvement in transmission efficiency, and an increase in system capacity.

## Description

### Technical Field

The present invention relates to a base station apparatus and packet transmission method for performing high-speed downlink packet access.

### Background Art

There is developed High-Speed Downlink Packet Access (HSDPA and the like) in which multiple communication terminal apparatuses share a high-speed and large-capacity downlink channel and performs high-speed packet transmission. In this transmission system, techniques such as a scheduling technique, an adaptive modulation technique and the like are used in order to improve transmission efficiency. The scheduling technique is one in which individual communication terminal apparatuses observe the propagation conditions of downlinks and a base station apparatus compares the propagation conditions reported from the respective communication terminal apparatuses to perform packet transmission to a communication terminal apparatus with a good propagation path condition. Moreover, in consideration of transmission efficiency to the individual communication terminal apparatuses, sequence control such as priority transmission of data that is required to be retransmitted is performed. The adaptive modulation technique is one in which a modulation scheme or an error-correcting code is adaptively changed in accordance with the propagation condition of the communication terminal apparatus that performs packet transmission.

Then, when the high-speed packet transmitted from the base station apparatus does not satisfy a predetermined reception quality at the communication terminal apparatus, the base station apparatus retransmits a packet.

Accordingly, in these techniques, since control is made by the report of the propagation condition of the downlink from the communication terminal apparatus, when a report value does not correctly reflect the propagation condition, the number of packet retransmission will be increased to decrease the transmission efficiency.

For this reason, there is conventionally disclosed a technique that considers a change in the propagation condition during the time from when the report value is received until downlink transmission is performed to predict a propagation condition at the time of downlink transmission is predicted based on the report value (IEEE Vehicular Technology Conference, Fall 2000 (VTC2000) , Boston, MA, USA, September 24-28, 2000, pp 1804-1811 "Hybrid type-II ARQ/AMS supported by Channel Predictive Scheduling in a Multi-user Scenario").

However, in the report value from the communication terminal apparatus, an error is included according to the propagation condition and the error is changed depending on the state of the communication terminal apparatus. In contrast to this, in the conventional high-speed downlink packet access, since predictive control is uniformly carried out based on only the report value without considering the error, there is a problem in that transmission efficiency is limited such as: transmission that meets the actual propagation condition is not attained, so that retransmission is required and the like.

### Disclosure of Invention

An object of the present invention is to provide a base station apparatus and packet transmission method capable of attaining a reduction in the number of retransmission, improvement in transmission efficiency, and an increase in system capacity by performing transmission with consideration given to an error included in a report value in high-speed downlink packet access.

The object is achieved by calculating likelihood of a report value based on the number of paths through which despreading is performed and Doppler frequency to determine a scheduling and a modulation scheme using the report value and the likelihood.

### Brief Description of Drawings

FIG. 1 is a block diagram illustrating the configuration of a base station apparatus according to Embodiment 1 of the present invention;
FIG. 2 is a view explaining a likelihood calculation method according to Embodiment 1 of the present invention;
FIG. 3 is a view explaining a scheduling according to Embodiment 1 of the present invention;
FIG. 4 is a view explaining a method for deciding an encoding rate and a modulation scheme according to Embodiment 1 of the present invention;
FIG. 5 is a block diagram illustrating the configuration of a base station apparatus according to Embodiment 2 of the present invention;
FIG. 6 is a view explaining a scheduling according to Embodiment 2 of the present invention;
FIG. 7 is a block diagram illustrating the configuration of a base station apparatus according to Embodiment 3 of the present invention;
FIG. 8 is a view explaining a scheduling according to Embodiment 3 of the present invention;
FIG. 9 is a block diagram illustrating the configuration of a base station apparatus according to Embodiment 4 of the present invention;
FIG. 10 is a block diagram illustrating a method for adjusting likelihood to each likelihood criterion according to Embodiment 4 of the present invention;
FIG. 11 is a view explaining a method for adjusting a threshold of the likelihood determination criterion according to Embodiment 4 of the present invention;
FIG. 12 is a block diagram illustrating the configuration of a base station apparatus according to Embodiment 5 of the present invention;
FIG. 13 is a view explaining a method for adjusting an encoding rate and a modulation scheme according to Embodiment 5 of the present invention;
FIG. 14 is a block diagram illustrating the configuration of a base station apparatus according to Embodiment 6 of the present invention; and
FIG. 15 is a view explaining a method for adjusting an averaging length of a report value according to Embodiment 6 of the present invention.

### Best Mode for Carrying Out the Invention

Embodiments of the present invention will be explained with reference to the drawings.

### (Embodiment 1)

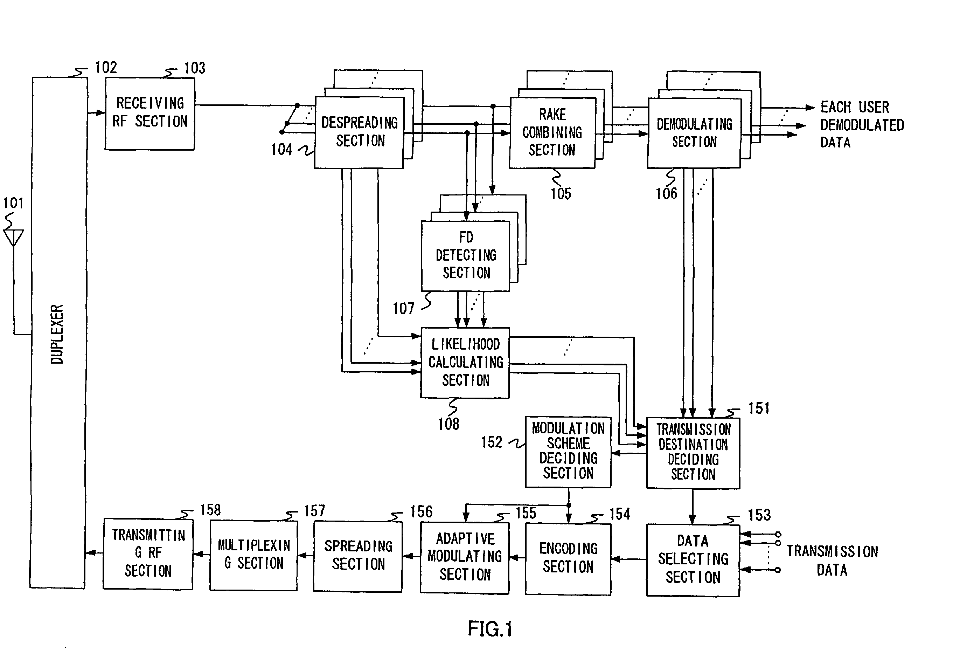

FIG. 1 is a block diagram illustrating the configuration of a base station apparatus according to Embodiment 1 of the present invention.

In FIG. 1, the base station apparatus includes an antenna 101, a duplexer 102, a receiving RF section 103, a despreading section 104, a RAKE combining section 105, a demodulating section 106, an fD detecting section 107, and a likelihood calculating section 108. The base station apparatus further includes a transmission destination deciding section 151, a modulation scheme deciding section 152, a data selecting section 153, an encoding section 154, an adaptive modulating section 155, a spreading section 156, a multiplexing section 157, and a transmitting RF section 158.

The duplexer 102 outputs a signal received through the antenna 101 to the receiving RF section 103. Moreover, the duplexer 102 radio transmits a signal output from the transmitting RF section 158 through the antenna 101.

The receiving RF section 103 converts a received signal with a radio frequency output from the duplexer 102 into a baseband digital signal and outputs it to the despreading section 104.

The number of despreading sections 104, which corresponds to the number of communication terminal apparatuses that perform radio communication, is prepared, and each despreads the baseband signal output from the receiving RF section 103 and outputs it to the RAKE combining section 105. Moreover, the despreading section 104 outputs a signal indicative of the number of paths through which despreading is performed to the likelihood calculating section 108.

The number of RAKE combining sections 105, which corresponds to the number of communication terminal apparatuses that perform radio communication, is prepared, and each RAKE combines the despread signals of the respective paths, and outputs the combined signal to the demodulating section 106 and the fD detecting section 107.

The number of demodulating sections 106, which corresponds to the number of communication terminal apparatuses that perform radio communication, is prepared, and each demodulates the RAKE combined signal. Then, the demodulating section 106 separates a report value from the demodulated signal and outputs it to the transmission destination deciding section 151. It is noted that the report value measured by the communication terminal apparatus is a value indicating the propagation path condition between each relevant communication terminal apparatus and the base station apparatus.

The fD detecting section 107, which corresponds to the number of communication terminal apparatuses that perform radio communication, is prepared, and each detects Doppler frequency (fD) that is a fading variation of the propagation path between each communication terminal apparatus and the base station apparatus from the despread signal, and outputs a signal indicating the detected Doppler frequency to the likelihood calculating section 108. Additionally, it is assumed that the Doppler frequency corresponds to a fading variation rate and that the higher the Doppler frequency is, the faster the fading variation becomes.

The likelihood calculating section 108 calculates likelihood of the report value transmitted from each communication terminal apparatus based on the number of paths which despreading is performed and the Doppler frequency, and outputs likelihood information to the transmission destination deciding section 151. Additionally, the detailson the likelihood calculating method by the likelihood calculating section 108 will be described later.

The transmission destination deciding section 151 decides a communication terminal apparatus that transmits a high-speed downlink packet based on a determination value obtained by multiplying the report value by the likelihood. This is called a scheduling. Then, the transmission destination deciding section 151 outputs information, which indicates the communication terminal apparatus that transmits the high-speed downlink packet, to the data selecting section 153. The transmission destination deciding section 151 also outputs the determination value of the communication terminal apparatus that transmits the high-speed downlink packet to the modulation scheme deciding section 152. Additionally, the details on the scheduling of the transmission destination deciding section 151 will be described later.

The modulation scheme deciding section 152 decides an encoding rate of the high-speed downlink packet and a modulation scheme thereof based on the determination value. Then, the modulation scheme deciding section 152 directs the encoding rate to the encoding section 154 and directs the modulation scheme to the adaptive modulating section 155. Additionally, the details on the method for deciding the encoding rate and the modulation scheme by the modulation scheme deciding section 152 will be described later.

The data selecting section 153 selects only transmission data of the corresponding communication terminal apparatus based on the decision of the transmission destination deciding section 151 and outputs it to the encoding section 154. The encoding section 154 encodes an output signal of the data selecting section 153 by the scheme of the encoding rate directed by the modulation scheme deciding section 152 and outputs it to the adaptive modulating section 155. The adaptive modulating section 155 modulates an output signal of the encoding section 154 by the modulation scheme directed by the modulation scheme deciding section 152 and outputs it to the spreading section 156. The spreading section 156 spreads an output signal of the adaptive modulating section 155 and outputs it to the multiplexing section 157. The multiplexing section 157 multiplexes an output signal of the spreading section 156 and outputs it to the transmitting RF section 158. The transmitting RF section 158 converts a baseband digital signal output from the multiplexing section 157 into a radio frequency signal and outputs it to the duplexer 102.

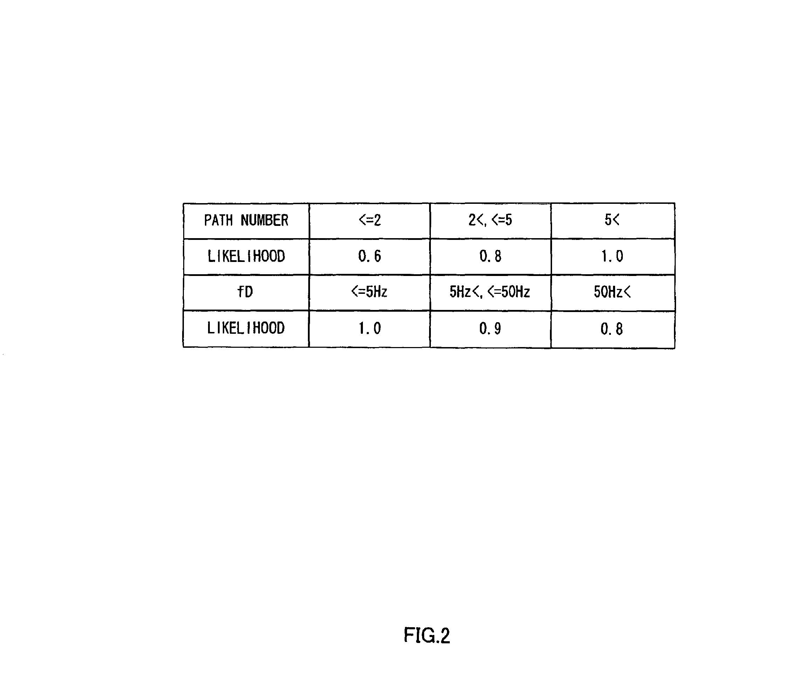

A specific explanation will be next given of a likelihood calculating method by the likelihood calculating section 108 using FIG. 2. FIG. 2 is a view explaining the likelihood calculating method according to the present embodiment, and shows an example of a relationship between the number of paths or fD and the likelihood.

In the case of FIG. 2, the likelihood calculating section 108 sets likelihood to "0.6" when the number of paths is "two or less" and to "0.8" when the number of paths is "more than two and five or less,'' and to "1.0" when the number of paths is "more than five." Moreover, the likelihood calculating section 108 sets likelihood to "1.0" when fD is "5 Hz or less" and to "0.9" when fD is "more than 5Hz and 50 Hz or less", and to "0.8" when fD is "more than 50 Hz."

In this way, the likelihood calculating section 108 increases the likelihood as the number of paths used in receiving is large. This is because the fading variation is suppressed as the number of paths is increased, thereby raising a possibility that the communication terminal apparatus will demodulate the high-speed downlink packet correctly. The likelihood calculating section 108 decreases the likelihood as fD is increased. This is because the higher fD is, the faster the fading variation is, thereby raising a possibility that the communication terminal apparatus will demodulate the high-speed downlink packet correctly.

Additionally, the likelihood calculating section 108 may use the likelihood calculated based on ether the number of paths or fD as likelihood information directly, or a value obtained by multiplying likelihood based on the number of paths by likelihood based on fD as likelihood information. Moreover, in place of fD, a moving speed of the communication terminal apparatus that is obtained by conversion based on fD may be used to calculate the likelihood.

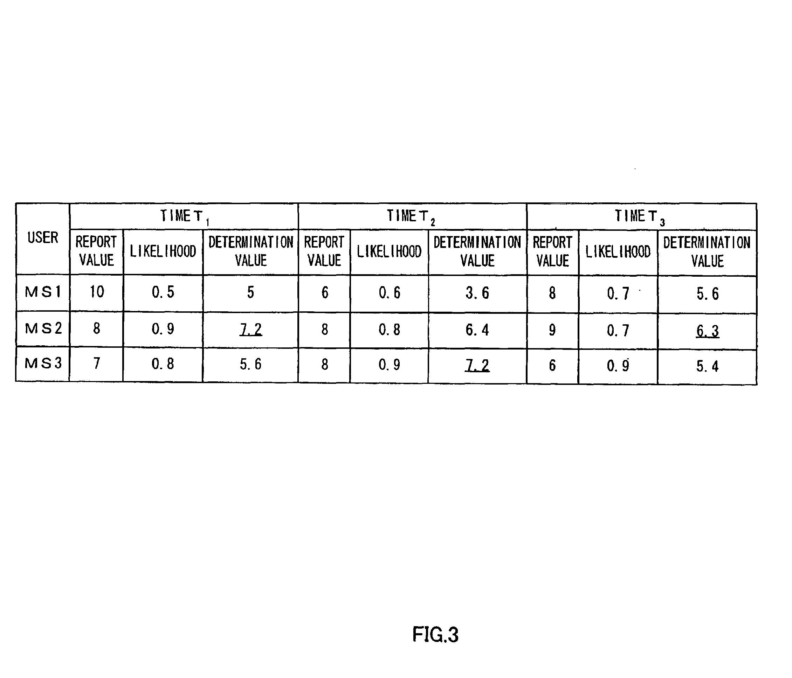

A specific explanation will be next given of the scheduling of the transmission destination deciding section 151 using FIG. 3. FIG. 3 is a view explaining the scheduling according to the present embodiment.

In FIG. 3, a case is considered in which the base station apparatus transmits the high-speed downlink packet to any one of three communication terminal apparatuses (users) MS 1 to MS3.

The transmission destination deciding section 151 calculates each determination value by multiplying the report value from each of the communication terminal apparatuses MS1 to MS3 by the likelihood at a predetermined time (T1 to T3) and performs a scheduling to transmit the high-speed downlink packet to the communication terminal apparatus having the highest determination value. The report value from each MS is a value indicating the propagation path condition between each MS and the base station apparatus, and suppose that it is shown that the larger the numerical value is, the better the propagation path condition is.

For example, in the case of time T1 in FIG. 3, a scheduling is performed to transmit the high-speed downlink packet to M2 having the highest determination value.

Additionally, in the conventional base station apparatus, a scheduling is performed to transmit the high-speed downlink packet to M1 having the highest determination value. However, in this case, since MS has a low likelihood, the fading variation is large and there is a possibility that the actual propagation path will be poorer than the report value, so that a possibility that the high-speed downlink packet will be correctly received is expected to low.

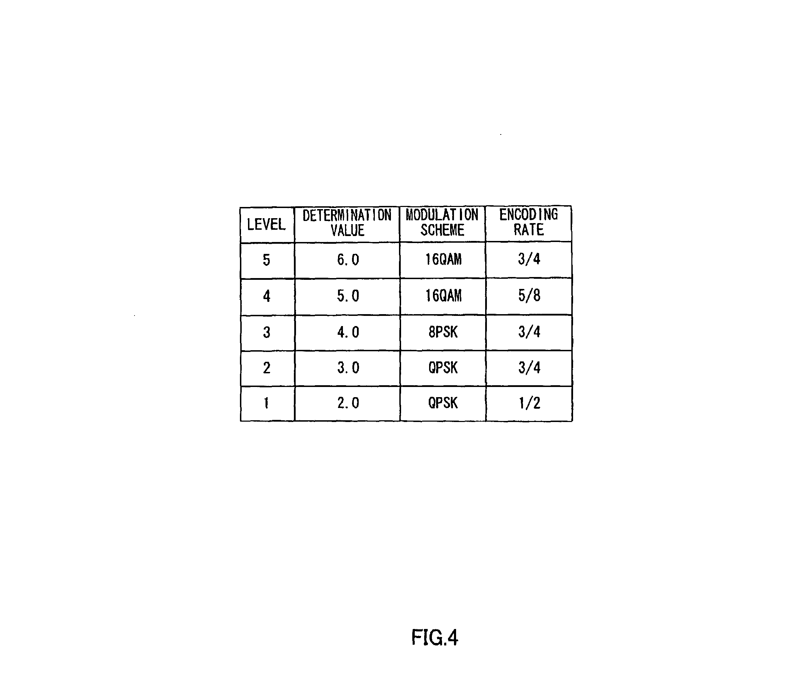

A specific explanation will be next given of the method for deciding the encoding rate and the modulation scheme by the modulation scheme deciding section 152 using FIG. 4. FIG. 4 is a view explaining the method for deciding the encoding rate and the modulation scheme according to the present embodiment.

The modulation scheme deciding section 152 decides an encoding rate and a modulation scheme according to the determination value input from the transmission destination deciding section 151.

For example, since the determination value input from the transmission destination deciding section 151 at time T1 in the aforementioned FIG. 3 is "7.2" and this determination value exceeds a maximum determination value "6" in FIG. 4, the modulation scheme deciding section 152 decides the modulation scheme to "16QAM" and the encoding rate to "3/4."

Thus, according to the present embodiment, since the scheduling and decision of modulation scheme are performed based on the determination value obtained by multiplying the report value by the likelihood, the error included in the report value is considered to predict the actual propagation condition with high accuracy to allow transmission of the high-speed downlink packet, making it possible to attain a reduction in the number of retransmission, improvement in the transmission efficiency, and an increase in the system capacity.

Additionally, though the present embodiment has shown the case in which the result obtained by multiplying the report value by the likelihood is applied to both the scheduling and the modulation scheme decision, this may be applied to either the scheduling or the modulation scheme decision.

Moreover, in place of the propagation path condition report value from each communication terminal apparatus, the modulation scheme selected by the communication terminal apparatus may be reported. In this case, the base station apparatus performs the scheduling based on the likelihood of the modulation scheme report value and performs transmission using the modulation scheme selected by the communication terminal apparatus.

### (Embodiment 2)

Embodiment 2 will explain a case in which the number of retransmission of the relevant transmission data to each communication terminal apparatus is reflected in the determination value.

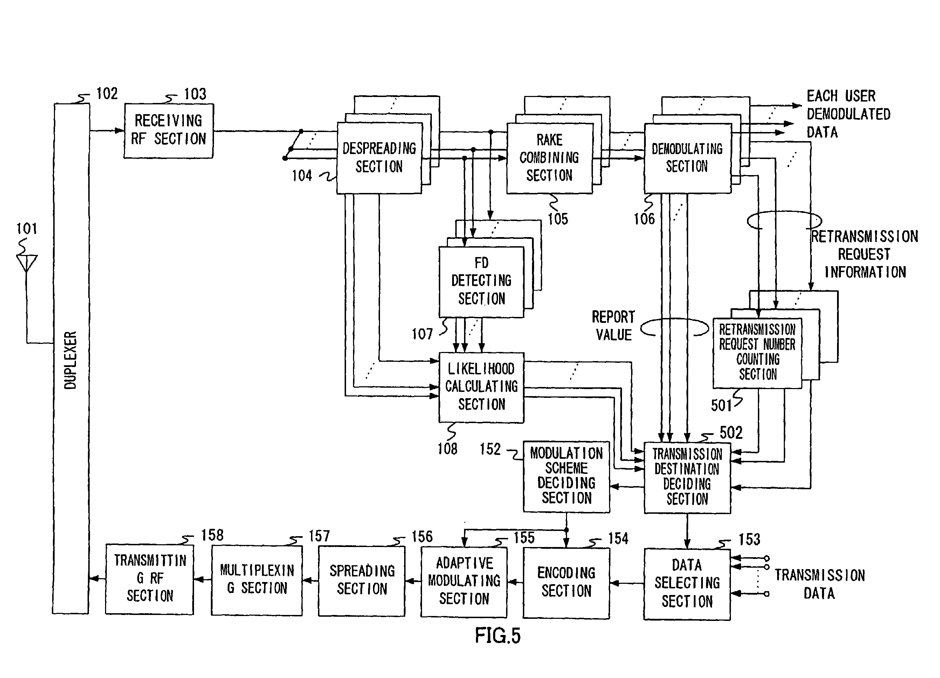

FIG. 5 is a block diagram illustrating the configuration of the base station apparatus according to Embodiment 2 of the present invention. Additionally, in FIG. 5, the structural components common to FIG. 1 are assigned the same reference numerals as in FIG. 1 to omit specific descriptions thereof.

The base station apparatus in FIG. 5 adopts a configuration in which a retransmission request number counting section 501 is added as compared with FIG. 1. Moreover, the base station apparatus in FIG. 5 is different from the transmission destination deciding section 151 of FIG. 1 in the function of a transmission destination deciding section 502.

The demodulating section 106 extracts information indicating a retransmission request from the demodulated signal and outputs it to the retransmission request number counting section 501. The retransmission request number counting section 501 counts the number of continuous retransmission requests for each communication terminal apparatus and outputs it to the transmission destination deciding section 502.

The transmission destination deciding section 502 obtains a determination value by multiplying the report value by a coefficient based on the likelihood and the number of retransmission requests and decides a communication terminal to which the high-speed downlink packet is transmitted based on the determination value. In additional, the coefficient is increased with an increase in the number of retransmission to raise the likelihood and the determination value, that is, to make them easily selectable as transmission. Further, when retransmission is completed, the coefficient is reset.

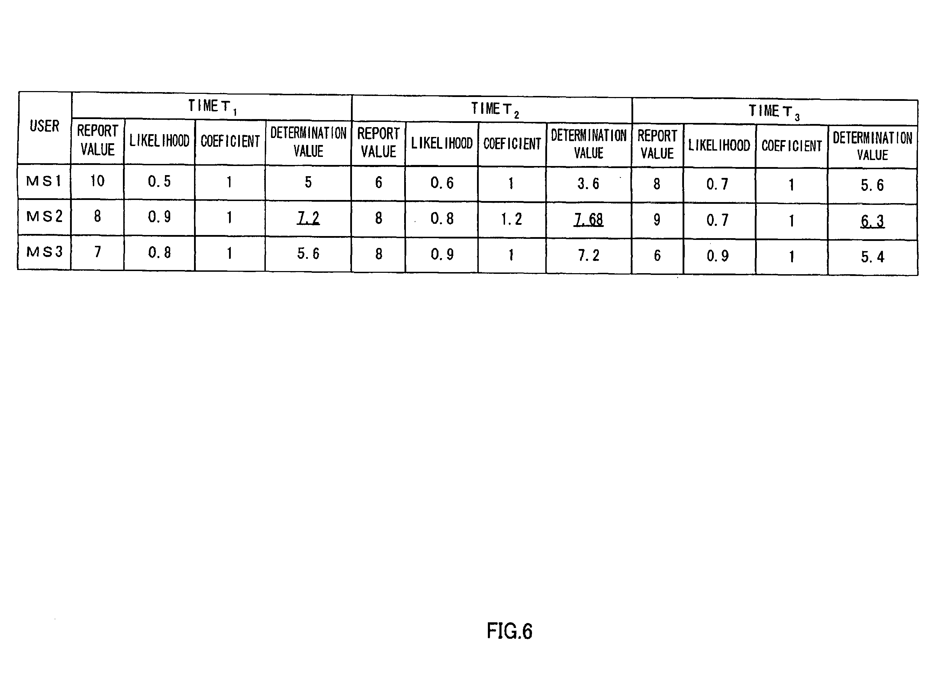

A specific explanation will be next given of the scheduling of the transmission destination deciding section 502 using FIG. 6. FIG. 6 is a view explaining the scheduling according to the present embodiment.

In FIG. 6, a case is considered in which the base station apparatus transmits the high-speed downlink packet to any one of three communication terminal apparatuses (users) MS 1 to MS3. Moreover, in FIG. 6, it is assumed that coefficient "1" is set to data of retransmission number "0", coefficient "1.2" is set to retransmission number "1", coefficient "1.4" is set to retransmission number "2," ...

The transmission destination deciding section 502 calculates each determination value by multiplying the report value from each of the communication terminal apparatuses MS1 to MS3 by the likelihood at a predetermined time (T1 to T3) and performs a scheduling to transmit the high-speed downlink packet to the communication terminal apparatus having the highest determination value.

For example, in FIG. 6, when data transmitted to MS2 is not correctly received at time T1 and retransmission is requested at time T2, coefficient of MS2 becomes "1.2" at time T2. As a result, since MS2 has the highest determination value at time T2, the transmission destination deciding section 502 performs the scheduling to transmit the high-speed downlink packet to MS2.

In this way, the number of retransmission is _{w} reflected in the determination value to allow the scheduling with consideration given to the number of retransmission, making it possible to impartially provide throughput of transmission data to each communication terminal apparatus. Moreover, the modulationscheme decidingsection 152 performs control to drop the level at the time of retransmission to carry out reception without fail by the communication terminal apparatus, making it possible to suppress the repetition of retransmission.

### (Embodiment 3)

Embodiment 3 will explain a case in which the propagation path condition at the high-speed downlink packet transmitting time is predicted based on the report values of the propagation conditions received from the communication terminal apparatuses in the past to perform the scheduling.

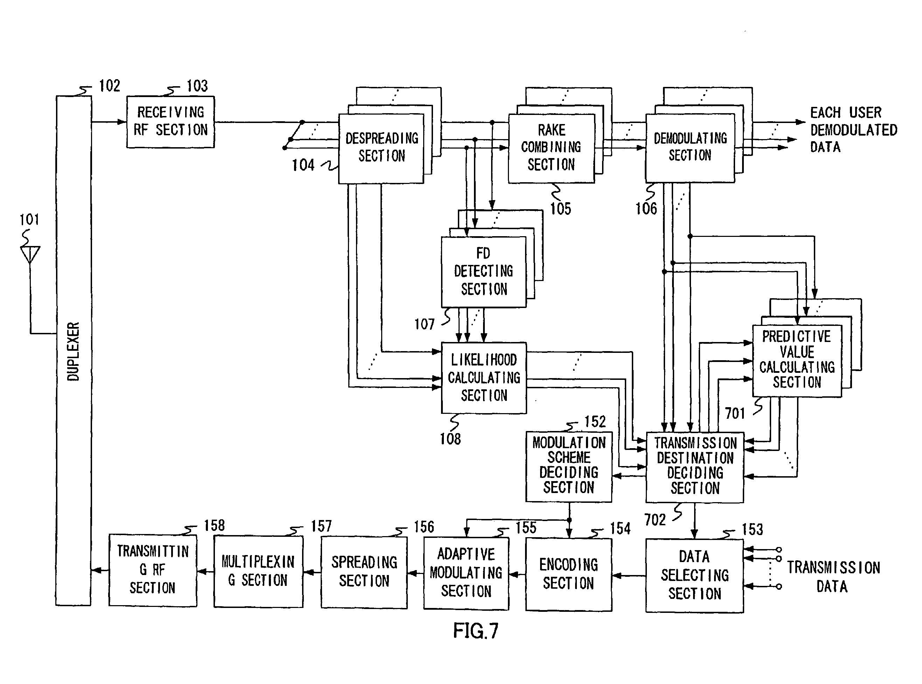

FIG. 7 is a block diagram illustrating the configuration of the base station apparatus according to Embodiment 3 of the present invention. Additionally, in FIG. 7, the structural components common to FIG. 1 are assigned the same reference numerals as in FIG. 1 to omit specific descriptions thereof.

The base station apparatus in FIG. 7 adopts a configuration in which a predictive value calculating section 701 is added as compared with FIG. 1. Moreover, the base station apparatus in FIG. 7 is different from the transmission destination deciding section 151 of FIG. 1 in the function of a transmission destination deciding section 702.

The demodulating section 106 separates the report value from the demodulated signal and outputs it to the predictive value calculating section 701 and the transmission destination deciding section 702.

The number of predictive value calculating sections 701, which corresponds to the number of communication terminal apparatuses that perform radio communication, is prepared, and each calculates a predictive value of a future propagation path condition based on the report values of the propagation conditions received in the past, and outputs the predictive value to the transmission destination deciding section 702 in connection with each communication terminal apparatus. In addition, as the predictive value calculating method, there are used a method by averaging the past report values, a linear prediction, a secondary prediction, a propagation path prediction by a spline as in T.Ekman and G.Kubin, "Nonlinear prediction of mobile radio channels: measurements and MATS model designs", ICASSP, IEEE international conference, March 1999.

Thetransmission destination deciding section 702 decides a communication terminal apparatus that transmits the high-speed downlink packet based on a determination value obtained by multiplying the report value by the likelihood and a predictive determination value obtained by multiplying a predictive value by the likelihood.

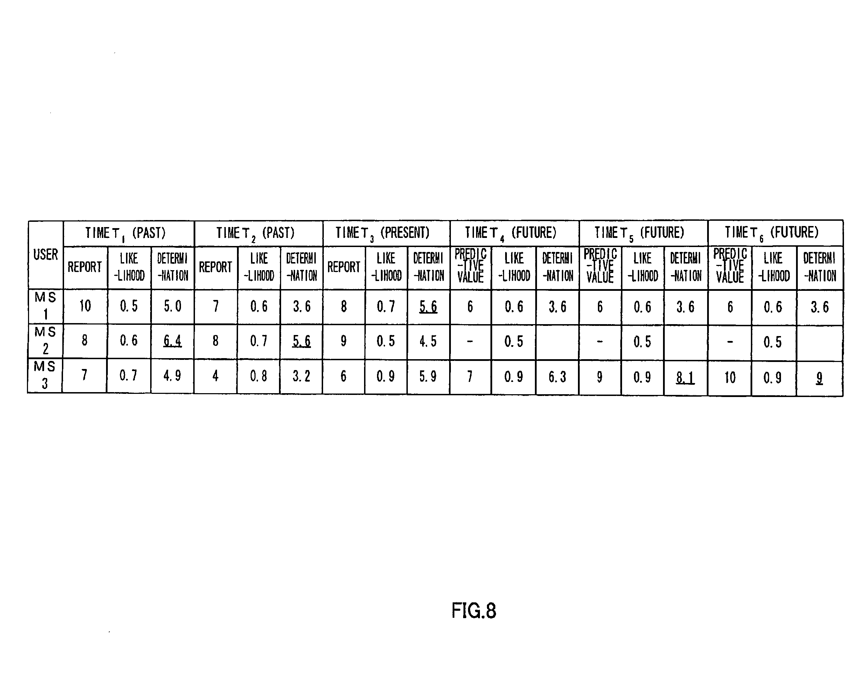

The following will specifically explain the scheduling of the transmission destination deciding section 702 using FIG. 8. FIG. 8 is a view explaining the scheduling according to the present embodiment.

In FIG. 8, it is assumed that the current time is T3 and that the prediction value calculating section 701 calculates predictive values at times T4 to T6 based on report values at times T1 to T3.

The transmission destination deciding section 702 first selects a communication terminal apparatus having a current determination value higher than a predetermined threshold, and predicts a future propagation path condition of only the selected communication terminal apparatus.

This is because when measured fD is low, the propagation path condition is relatively easily predicted and reliability of the predictive value is high, while when measured fD is high, the propagation path condition is predicted with difficulty and reliability of the calculated predictive value is low. Moreover, this is because the more the number of paths is, the higher the likelihood and the reliability of the prediction are, and the less the number of paths is, the lower the likelihood and the reliability of the prediction are.

For instance, in FIG. 8, if a first threshold is set to "0.5", since the communication terminal apparatus having a current determination value higher than the first threshold is MS1 and M3, the transmission destination deciding section 702 predicts the future propagation conditions of M1 and M3.

Next, the transmission destination deciding section 702 calculates a predictive determination value by multiplying the predictive value input from the prediction value calculating section 701 by the current likelihood, and performs the scheduling to transmit the high-speed downlink packet to a communication terminal apparatus having the highest predictive determination value that is higher than a predetermined second threshold. Moreover, at time when there is no communication terminal apparatus whose predictive determination value is higher than the predetermined second threshold, the deciding section 702 performs the scheduling by the method explained in Embodiment 1.

For instance, in FIG. 8, if the second threshold is set to "0.75", since the predictive values of M3 at time T5 and time T6 are higher than the second threshold, the transmission destination deciding section 702 performs the scheduling to transmit the high-speed downlink packet to M3 at time T5 and time T6. Further, since at time T4, there is no communication terminal apparatus whose predictive determination value is higher than the predetermined second threshold, the deciding section 702 performs the scheduling by the method explained in Embodiment 1 at time T4.

In this way, according to the present embodiment, since the scheduling that meets the propagation path condition as compared with Embodiment 1 can be performed by predicting the propagation path condition at the high-speed downlink packet transmitting time based on the report values of the propagation conditions received from the communication terminal apparatus in the past, transmission efficiency can be more improved and a processing load applied on the base station apparatus can be dispersed in time.

Furthermore, in addition to the scheduling, the selection of the modulation scheme may be performed based on the prediction. This makes it possible to achieve more improvement in the transmission efficiency and the time dispersion of the processing load applied on the base station apparatus.

### (Embodiment 4)

Embodiment 4 will explain a case in which likelihood to each likelihood determination criterion or a threshold of likelihood determination criterion is adaptively adjusted.

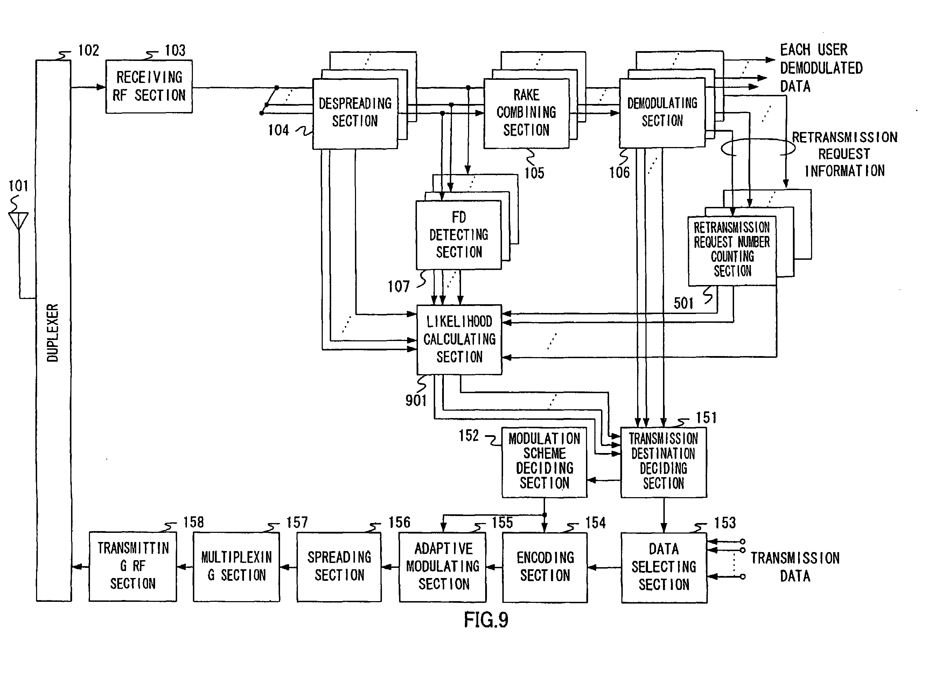

FIG. 9 is a block diagram illustrating the configuration of a base station apparatus according to Embodiment 4 of the present invention. Additionally, in FIG. 9, the structural components common to FIG. 1 are assigned the same reference numerals as in FIG. 1 to omit specific descriptions thereof.

The base station apparatus in FIG. 9 adopts a configuration in which a retransmission request number counting section 501 is added as compared with FIG. 1. Moreover, the base station apparatus in FIG. 9 is different from the likelihood calculating section 108 of the base station apparatus of FIG. 1 in the function of a likelihood calculating section 901.

The demodulating section 106 extracts information indicating a retransmission request from the demodulated signal and outputs it to the retransmission request number counting section 501. The retransmission request number counting section 501 counts the numberof continuous retransmission requests for each communication terminal apparatus and outputs it to the likelihood calculating section 901.

The likelihood calculating section 901 calculates likelihood of each communication terminal apparatus based on the number of paths through which despreading is performed and Doppler frequency and appropriately adjusts the likelihood to each likelihood determination criterion or the threshold of likelihood determination criterion based on the number of retransmission requests and the like.

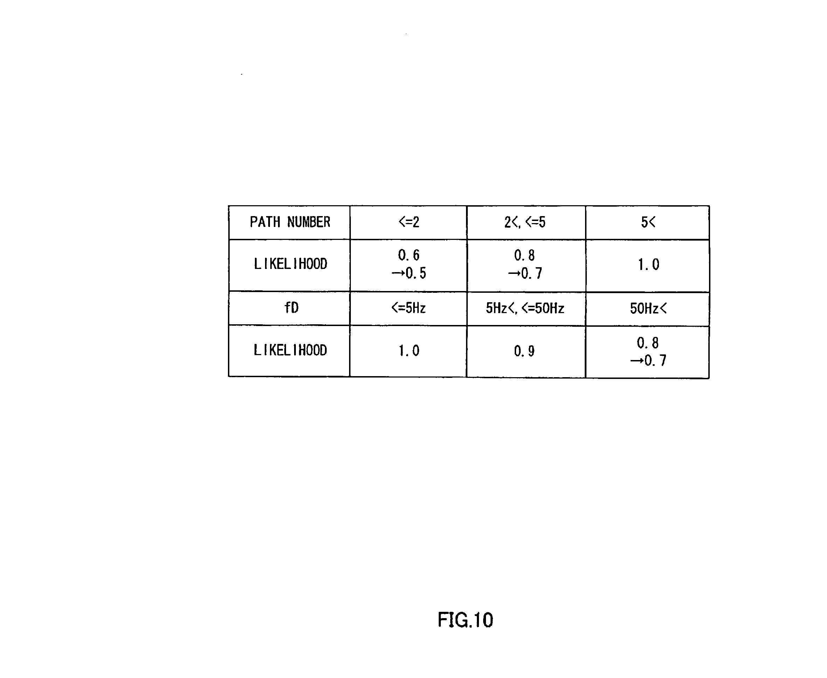

FIG. 10 is a view explaining a method for adjusting likelihood to each likelihood determination criterion according to the present embodiment. FIG. 10 shows a case in which the number of retransmission is large when the number of paths is "more than 5" and fD is "higher than 50 Hz." In this case, the likelihood calculating section 901 sets likelihood corresponding to the number of paths of "2 or less" and likelihood corresponding to the number of paths of "more than 2 and 5 or less" to low. The likelihood calculating section 901 also sets likelihood corresponding to fD of "higher than 50 Hz" to low.

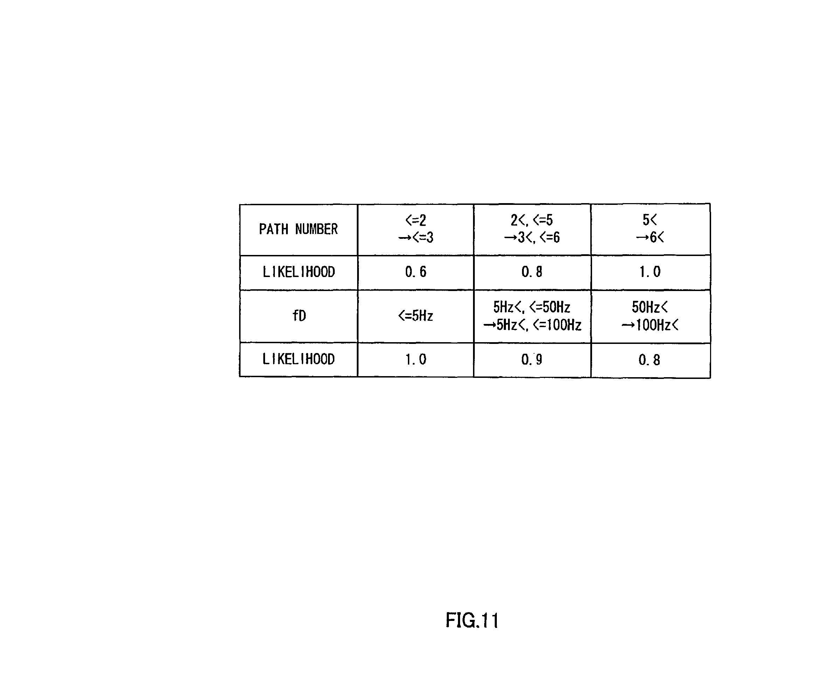

FIG. 11 is a view explaining a method for adjusting a threshold of the likelihood determination criterion according to the present embodiment. FIG. 11 shows a case in which the distribution of the number of paths is one-sided to the case of "more than 5" and the distribution of fD is one-sided to the case of "higher than 50 Hz." In this case, the likelihood calculating section 901 sets the threshold of the number of paths whose likelihood is changed to "2 or less", "more than 2 and 6 or less" and "more than 6", and sets the threshold of the number of paths whose likelihood is changed to "5 Hz or less", "higher than 5Hz and 100 Hz or less" and "higher than 100 Hz." In addition, the above likelihood or the likelihood determination criterion values may changed by selection from the preset values. Or dynamic adjustment may be performed.

In this way, according to this embodiment, the likelihood to each likelihood determination criterion or the threshold of the likelihood determination criterion is appropriately adjusted with the trend of the propagation condition to allow the setting of the likelihood that precisely reflects the propagation path, making it possible to increase accuracy of the likelihood determination of the report value.

Additionally, the use of the combination of the present embodiment and Embodiment 3 feeds back the correctness of the prediction of the propagation path condition using the number of retransmission as a medium to adjust the likelihood, allowing the transmission efficiency to be improved.

### (Embodiment 5)

Embodiment 5 will explain a case in which the encoding rate and the modulation scheme to the determination value are suitably adjusted.

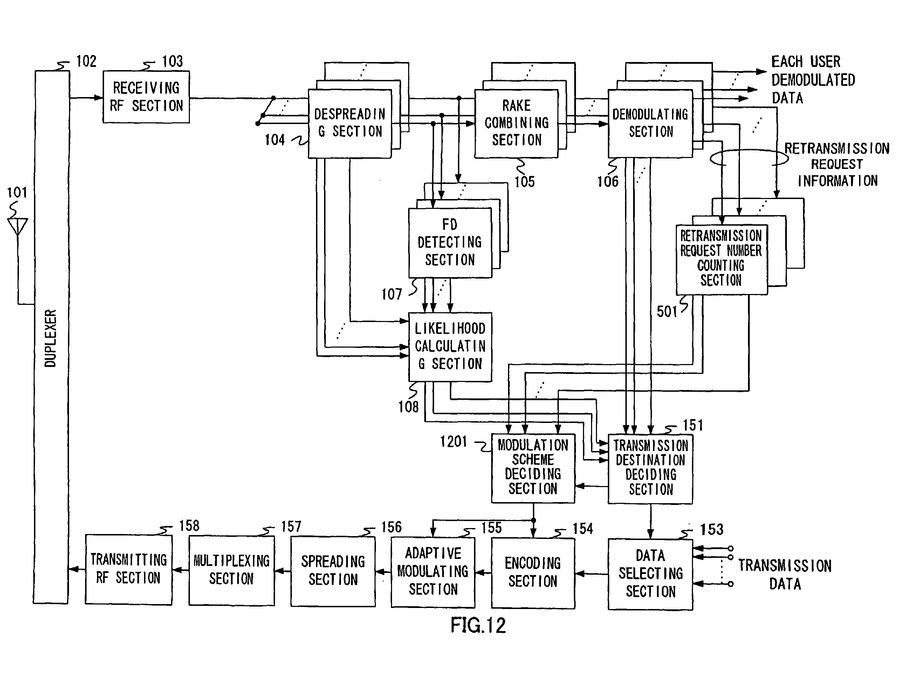

FIG. 12 is a block diagram illustrating the configuration of a base station apparatus according to Embodiment 5 of the present invention. Additionally, in FIG. 12, the structural components common to FIG. 1 are assigned the same reference numerals as in FIG. 1 to omit specific descriptions thereof.

The base station apparatus in FIG. 12 is different from the modulation scheme deciding section 152 of FIG . 1 in the function of a modulation scheme deciding section 1201.

The demodulating section 106 extracts information indicating a retransmission request from the demodulated signal and outputs it to the modulation scheme deciding section 1201.

The modulation scheme deciding section 1201 decides an encoding rate of the high-speed downlink packet and a modulation scheme thereof based on the determination value and suitably adjusts the encoding rate and the modulation scheme to the report value based on the number of retransmission requests.

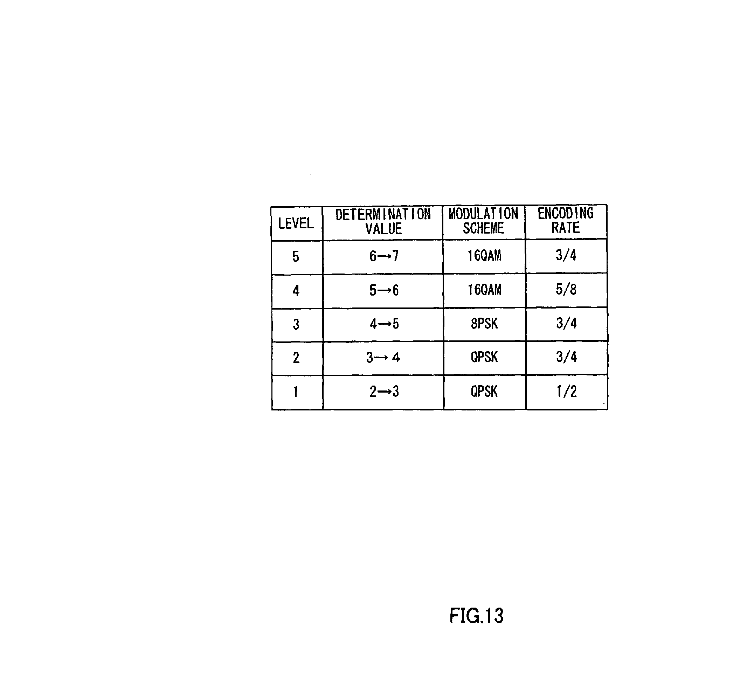

FIG. 13 is a view explaining a method for adjusting an encoding rate and a modulation scheme according to the present embodiment. When the number of retransmission to the communication terminal apparatus is large, the determination value corresponding to each encoding rate and the modulation scheme is increased. FIG. 13 shows a case in which the determination value corresponding to each encoding rate and the modulation scheme is increased by "1."

By increasing the determination value corresponding to each encoding rate and the modulation scheme, the modulation scheme deciding section 1201 sets a coding method and a modulation scheme each having a low speed and a high error resistance to the same determination value as compared with before.

In this way, according to the present embodiment, the encoding rate and the modulation scheme to the report value are suitably adjusted based on the number of retransmission requests to select the modulation scheme that can perform reception properly by the communication terminal apparatus, making it possible to attain a reduction in the number of retransmission and an increase in the transmission efficiency.

### (Embodiment 6)

Embodiment 6 will explain a case in which an averaged length of the report value is controlled based on fD or the number of paths to suppress an error of the report value by the base station apparatus to improve likelihood of the report value.

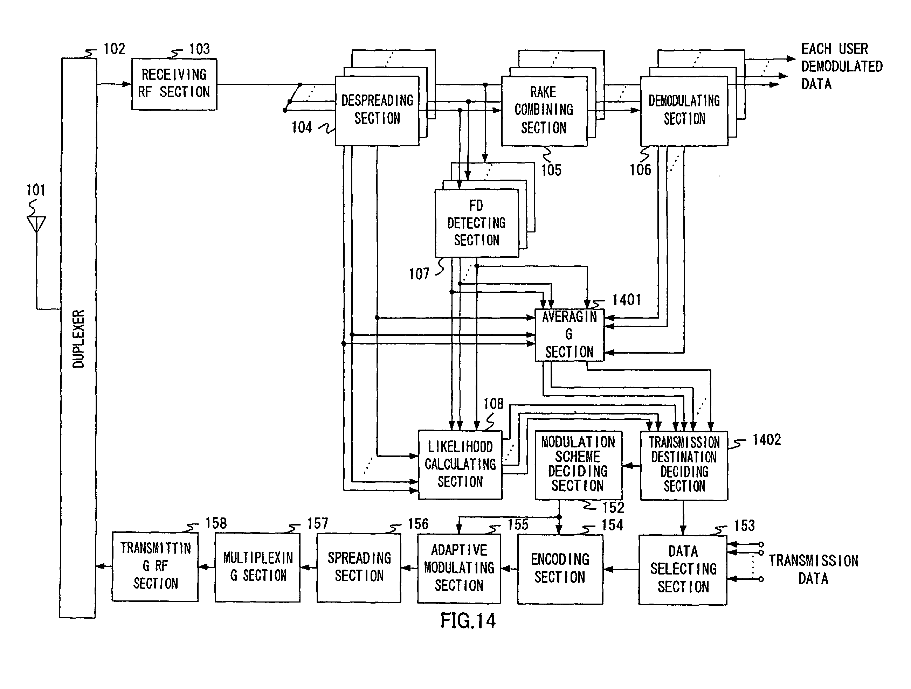

FIG. 14 is a block diagram illustrating the configuration of a base station apparatus according to Embodiment 6 of the present invention. Additionally, in FIG. 14, the structural components common to FIG. 1 are assigned the same reference numerals as in FIG. 1 to omit specific descriptions thereof.

The base station apparatus in FIG. 14 adopts a configuration in which an averaging section 1401 is added as compared with FIG. 1. Moreover, the base station apparatus in FIG. 14 is different from the transmission destination deciding section 151 of FIG. 1 in the function of a transmission destination deciding section 1402.

The despreading section 104 outputs a signal indicative of the number of paths through which despreading is performed to the likelihood calculating section 108 and the averaging section 1401. The fD detecting section 107 outputs a signal indicative of a detected Doppler frequency to the likelihood calculating section 108 and the averaging section 1401.

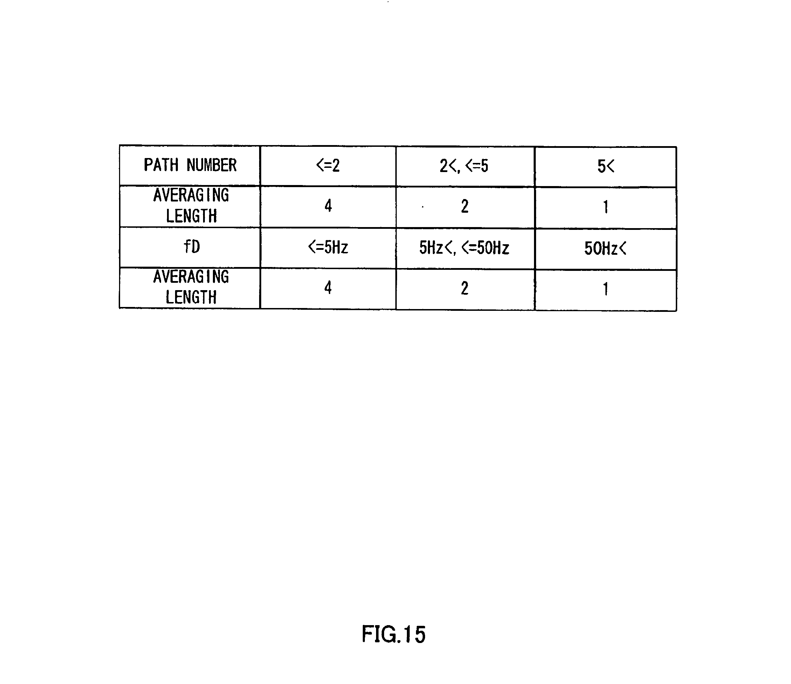

As illustrated in FIG. 15, the averaging section 1401 increases the averaging length of the report value as the number of paths is small. The averaging section 1401 also increases the averaging length of the report value as fD is low. The averaging length herein indicates the averaging number in connection with the latest report value.

The transmission destination deciding section 1402 decides a transmission destination of the high-speed downlink packet using the report value averaging by the averaging section 1401.

Accordingly, when fD is low or the number of paths is small, the likelihood of the report value can be increased by increasing the averaging length, and conversely, it is possible to follow the variation in the propagation path by decreasing the averaging length. Additionally, according to this embodiment, control can be performed with consideration given to both the detection result of fD and that of the number of paths at the same time.

Additionally, in each of the aforementioned embodiments, the number of paths and the Doppler frequency were used as the determination criterion of likelihood, but the present invention is not limited to this. For example, the number of paths and the Doppler frequency, or the other determination criterion such as SIR and the like may be singly used or the likelihood may be calculated based on combinations of multiple determination criteria. Furthermore, the present invention may be directly applied to control of the scheduling and the modulation scheme without performing calculation as a coefficient of the likelihood from the above determination criterion.

Furthermore, though each of the aforementioned embodiments has explained a case in which the determination value is calculated by multiplying the report value by the likelihood, but the present invention is not limited to this, and another method; the determination value is calculated by adding the likelihood to the report value, may be used as a determination value calculating method using the likelihood.

Furthermore, the aforementioned Embodiments 2 to 6 can be suitably combined.

As is obvious from the above explanation, according to the present invention, in the high-speed downlink packet access, the error included in the report value is considered to predict the actual propagation path condition with high accuracy to allow transmission, making it possible to attain a reduction in the number of retransmission, improvement in the transmission efficiency, and an increase in the system capacity.

This application is based on the Japanese Patent Application No. 2002-039288 filed on February 15, 2002, entire content of which is expressly incorporated by reference herein.

### Industrial Applicability

The present invention is suitable for use in a base station apparatus that performs high-speed downlink packet access.

## Claims

1. A base station apparatus comprising:
demodulating means for demodulating a received signal from a communication terminal apparatus in communication to extract a report value indicating a propagation path condition;
likelihood calculating means for calculating likelihood of the report value; and
transmission destination deciding means for deciding a communication terminal apparatus to which a packet is transmitted based on the report value and the likelihood.

2. The base station apparatus according to claim 1, wherein said likelihood calculating means sets likelihood to high as the number of paths subjected to despreading is large.

3. The base station apparatus according to claim 1, wherein said likelihood calculating means sets likelihood to low as Doppler frequency that is a fading variation of a propagation path between the base station apparatus and a mobile station apparatus is high.

4. The base station apparatus according to claim 1, wherein said likelihood calculating means adjusts likelihoodto each likelihood determination criterion according to the number of retransmission.

5. The base station apparatus according to claim 1, wherein said likelihood calculating means adjusts a threshold of the likelihood determination criterion according to the number of retransmission.

6. The base station apparatus according to claim 1, wherein said transmission destination deciding means calculates a determination value with likelihood of the report value reflected in the report value to decide a communication terminal apparatus having the highest determination value as a packet transmission destination.

7. The base station apparatus according to claim 1, wherein said transmission destination deciding means reflects a coefficient based on likelihood and the number of retransmission requests in the report value to calculate a determination value to decide a communication terminal apparatushaving the highest determination value as a packet transmission destination.

8. The base station apparatus according to claim 6, further comprising predict calculating means for calculating a predictive value indicating a future propagation path condition based on a report value of a propagation path condition received from the communication terminal apparatus in the past, wherein said transmission destination deciding means decides a communication terminal apparatus that transmits a packet based on the predictive determination value calculated with consideration given to the predictive value and the likelihood.

9. The base station apparatus according to claim 8, wherein said transmission destination deciding means selects a communication terminal apparatus with a current determination value higher than a predetermined first threshold to predict a future propagation path condition of only the selected communication terminal apparatus.

10. The base station apparatus according to claim 8, wherein said transmission destination deciding means decides a communication terminal apparatus having the highest predictive determination value that is higher than a predetermined second threshold.

11. The base station apparatus according to claim 1, further comprising averaging means for averaging the report value, wherein said transmission destination deciding means decides a packet transmission destination using the averaging report value.

12. The base station apparatus according to claim 11, wherein said averaging means increases an averaging length of the report value as the number of paths subjected to despreading is small.

13. The base station apparatus according to claim 11, wherein said averaging means increases the averaging length of the report value as Doppler frequency is low.

14. The base station apparatus according to claim 6, further comprising modulation scheme deciding means for deciding a packet encoding rate and a modulation scheme thereof based on the report value.

15. The base station apparatus according to claim 14, wherein said modulation scheme deciding means adjusts the encoding rate and the modulation scheme to the determination value according to the number of retransmission.

16. A packet transmission system comprising:
an apparatus for acquiring a report value indicating a propagation path condition;
an apparatus for calculating likelihood of the report value; and
an apparatus for deciding a packet transmission destination based on the report value and the likelihood.

17. A packet transmitting method comprising the steps of:
acquiring a report value indicating a propagation path condition;
calculating likelihood of the report value; and
deciding a packet transmission destination based on the report value and the likelihood.
